# EUROPEAN PATENT APPLICATION

(11) **EP 4 261 759 A1**
(43) Date of publication of application: **18.10.2023**
(21) Application number: 21902933.7
(22) Date of filing: 23.08.2021
(51) Int. Cl.: G06Q 10/08, G06Q 50/02

(54) **COMMODITY MANAGEMENT DEVICE, COMMODITY MANAGEMENT METHOD, AND PROGRAM**

(30) Priority: 10.12.2020 JP 2020204710
(71) Applicant: Sato Holdings Kabushiki Kaisha, Tokyo 108-0023 (JP)
(72) Inventor: YAMADA Noriyasu, Tokyo 108-0023 (JP); ASAHINA Hirokazu, Tokyo 108-0023 (JP); HARA Shogo, Tokyo 108-0023 (JP)
(74) Representative: Grünecker Patent- und Rechtsanwälte PartG mbB
(86) International application number: PCT/JP2021/030708
(87) International publication number: WO 2022/123828

(57) **Abstract**

A product management apparatus includes: a storage unit that stores first characteristic data indicating a characteristic of a first product at a first date and time; an acquisition unit that acquires second characteristic data indicating a characteristic of a second product at a second date and time after the first date and time; and a determination unit that determines whether the first product and the second product are identical based on the first characteristic data, the second characteristic data, and a time elapsed since the first date and time until the second date and time.

## Description

### [TECHNICAL FIELD]

The present invention relates to a product management apparatus, a product management method, and a program.

### [BACKGROUND ART]

Recently, attempts have been made to cater to consumer awareness of safety and to increase the added value of products by communicating detailed information related to the place of production or producer at the time of selling products such as vegetables and fruits. Also, methods have been proposed to attach a tag for individual discrimination of the product or to attach a label with a characteristic shape unique to the product (e.g., a mesh appearance on the surface of melons) to the product for use in individual discrimination of the product for the purpose of certifying the authenticity of the product (see, for example, patent literature 1).

### [Patent Literature]

[Patent Literature 1] JP2017-10050

### [SUMMARY OF INVENTION]

### [TECHNICAL PROBLEM]

Attaching a tag to each individual product requires a lot of work. The tag may peel away, or a wrongdoing of replacing the tag might take place. Further, it might not be possible to make proper individual discrimination if a label indicating a location used for individual discrimination is out of place.

An illustrative purpose of an aspect of the present invention is to provide a technology of determining the identity of a product based on a characteristic of the product.

### [SOLUTION TO PROBLEM]

A product management apparatus according to an aspect of the present invention includes: a storage unit that stores first characteristic data indicating a characteristic of a first product at a first date and time; an acquisition unit that acquires second characteristic data indicating a characteristic of a second product at a second date and time after the first date and time; and a determination unit that determines whether the first product and the second product are identical based on the first characteristic data, the second characteristic data, and a time elapsed since the first date and time until the second date and time.

### [ADVANTAGEOUS EFFECTS OF INVENTION]

According to an aspect of the present invention, it is possible to determine the identity of a product based on a characteristic of the product.

### [BRIEF DESCRIPTION OF DRAWINGS]

Fig. 1 schematically shows a function and a configuration of a product distribution system according to an embodiment;
Fig. 2 schematically shows an example of data acquired by the product management apparatus;
Fig. 3 schematically shows an example of change estimation data;
Fig. 4A-4C schematically shows a method of determining the identity by estimating a change in the characteristic of a first product or a second product; and
Fig. 5 is a sequence chart showing an exemplary operation of the product management apparatus.

### [DESCRIPTION OF EMBODIMENTS]

A description will be given of an embodiment of the present invention with reference to the drawings. The same numerals are used in the description to denote the same elements, and a duplicate description is omitted as appropriate.

A summary of the embodiment will be given. The embodiment relates to a product management apparatus for managing products individually. Recently, we have seen mounting consumer awareness of safety. It is considered desirable to track a history from the production of a product until the sales thereof properly and secure the traceability of the product. Meanwhile, products that are produced and consumed in a large quantity may not be managed individually but managed in units of lots that organize products according to the producer or date of production. In the case of management in units of lots, it is not possible to manage the history of a product strictly individually because individual differences between multiple products included in the same lot are not of concern. The embodiment addresses this issue by providing a product management apparatus capable of discriminating products individually and managing products individually.

In this embodiment, characteristic data indicating a characteristic of a product are collected in the distribution process of the product, and the product is discriminated individually based on the characteristic data for the products. In the embodiment, a characteristic that can be measured by using a sensor and that could vary from one product to another is measured and is collected as characteristic data. The product subject to measurement is a product distributed for the purpose of sale. Therefore, a characteristic that can be measured in a non-destructive manner without cutting the product or sampling a portion of the product is used. The embodiment is non-limiting as to the characteristic of the product, but shape, size, color, surface pattern or damage, weight, etc. of the product can be listed as examples. In the case the product is a perishable item, the characteristic of the product may change with time. For example, the surface color or pattern may change or the sugar concentration or maturity grade may change as a vegetable or a fruit becomes ripe. In this regard, the embodiment estimates a change in the characteristic of a product with time and realizes individual discrimination of the product by allowing for the change in the characteristic of the product.

In the embodiment, the individual product is discriminated by determining the identify of a product based on a characteristic of the product. Therefore, "identify of a product" means whether the product is the same on the individual level. As described above, the characteristic of a product may change with time. In the case the product is a tomato, for example, the product is green at the time of shipping, but the product turns red at the time of sale. To determine the identity of a tomato, therefore, "color", which is a changeable characteristic, is not given weight, and the identity is determined by giving weight to size, shape, weight, etc., which are characteristics that do not change easily, for example. In the case that the product is a flower such as rose, the product is a bud when shipped and may begin to turn into a flower when on sale. Therefore, to determine the identity of a rose, etc., for example, the flower petal, which is a changeable characteristic, is not given weight, and the identity is determined by giving weight to the number of leaves, shape of a leave, shape of a stem, number of branches, etc., which are characteristics that do not change easily. In the embodiment, the precision of determination of identity is increased by setting, for each product type, priority to a characteristic that is given weight in determination of identity and by setting a proper determination condition for each product type.

The "identity of a product" in the embodiment encompasses a certain tolerable range. Even when an individual product is identical, not all characteristics of the product are strictly the same (i.e., match). Some characteristics of the product may have changed with time, etc. For example, a comparison of the characteristics of products may reveal that some characteristics such as the shape and weight are identical but other characteristics such as the color of the product are different. This is addressed in this embodiment by estimating a change in a characteristic of the product by allowing for a time elapsed since the time of shipping until the time of sales and environment data such as temperature and humidity and determining that the product is identical when the product has a characteristic equivalent to the estimated post-change characteristic. Besides, when a portion of the product is damaged to result in a change in the appearance, a situation of delivery from the time of shipping to the time of sale, etc., is allowed for, and the product is determined to be identical even if the product is damaged.

In the embodiment, the identity of a product may be determined based on a characteristic of an object that accompanies the product as well as a characteristic of the product itself. "An object that accompanies the product" is a label attached to the product, a label attached to the box that contains the product, etc. When multiple products are contained in one box, for example, the box may be discriminated individually by using a label attached to the box that contains the multiple products, and the products may be discriminated individually based on the position or the arrangement of the product contained in the box. The characteristic of the product itself and the characteristic of the object that accompanies the product may be combined to determine the identity of the product. For example, the situation of delivery from the time of shipping of the product to the time of sales thereof may be determined based on the label attached to the box that contains the product. When the identity of the product cannot be determined merely by a characteristic of the product itself, those that meet a predetermined number of determination criteria or more may be determined to be similar, and, of those products determined to be similar, the product for which the delivery situation match may be determined to be identical.

A detailed description of the embodiment will be given below by showing an example in which the product is a tomato.

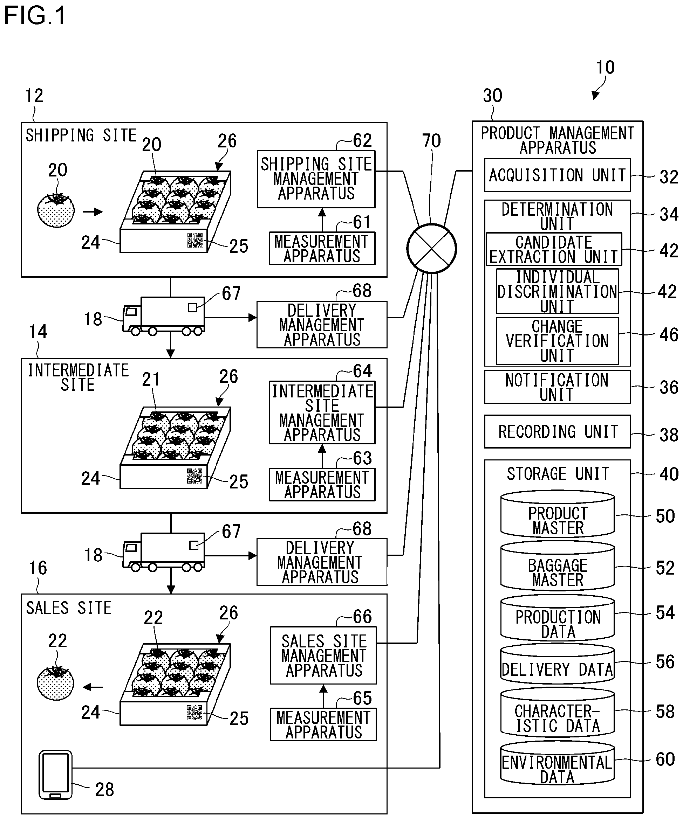

Fig. 1 schematically shows a function and a configuration of a product distribution system 10 according to an embodiment. Fig. 1 shows a flow running from the shipment of a tomato product from a shipping site 12 until it is delivered, via an intermediate site 14 and a delivery means 18, to a sales site 16 for sale. A measurement apparatus 61 and a shipping site management apparatus 62 are provided in the shipping site 12. A measurement apparatus 63 and an intermediate site management apparatus 64 are provided in the intermediate site 14. A measurement apparatus 65 and a sales site management apparatus 66 are provided in the sales site 16. Further, a measurement apparatus 67 is provided and a delivery management apparatus 68 for managing delivery by the delivery means 18 is provided in the delivery means 18. The shipping site management apparatus 62, the intermediate site management apparatus 64, the sales site management apparatus 66, and the delivery management apparatus 68 are connected to a network 70.

A product management apparatus 30 is connected to the network 70 such as the Internet and a wide area network (WAN). The product management apparatus 30 acquires, via the network 70, various data related to the product in the product distribution process and stores the data. The product management apparatus 30 acquires data related to the product from the shipping site management apparatus 62, the intermediate site management apparatus 64, the sales site management apparatus 66, and the delivery management apparatus 68. The product management apparatus 30 manages the product individually based on the acquired data. The product management apparatus 30 meets the need for safety and traceability of the product by providing the acquired data related to the product to business partners and consumers.

The functional blocks shown in the embodiment are implemented in hardware such as devices and mechanical apparatus exemplified by a CPU and a memory of a computer, and in software such as a computer program. Fig. 1 depicts functional blocks implemented by the cooperation of these elements. Therefore, it will be understood by those skilled in the art that these functional blocks are implemented in a variety of manners by a combination of hardware and software.

The product management apparatus 30, the shipping site management apparatus 62, the intermediate site management apparatus 64, the sales site management apparatus 66, and the delivery management apparatus 68 can be configured by using a general-purpose server apparatus. The server apparatus is, for example, provided with a processor such as a central processing unit (CPU) and a graphics processing unit (GPU), with a storage apparatus such as a read only memory (ROM), a random-access memory (RAM), a hard disk driver (HDD), or a flash memory, and with a communication apparatus connected to the network 70 for communication.

The product management apparatus 30 includes an acquisition unit 32, a determination unit 34, a notification unit 36, a recording unit 38, and a storage unit 40.

The acquisition unit 32 acquires data related to the product from the shipping site 12, the intermediate site 14, the sales site 16, the delivery means 18, a user terminal 28, etc. The determination unit 34 determines the identity of the product based on the data acquired by the acquisition unit 32. The notification unit 36 communicates information based on the determination by the determination unit 34 to the user terminal 28, etc. The recording unit 38 extracts data necessary for product management from the data acquired by the acquisition unit 32, converts the data into a format suitable for product management by removing data unnecessary for product management, and records the formatted data in the storage unit 40. The storage unit 40 stores a product master 50, a baggage master 52, production data 54, delivery data 56, characteristic data 58, and environmental data 60.

The product master 50 manages product IDs for individually discriminating products subject to management. The product ID is assigned for each individual product subject to management. In the case the product is a tomato, for example, one product ID is assigned to one tomato. The product master 50 stores the product name (e.g., tomato), date and time of issue, place of issue, etc., using the product ID as a key. The product ID is issued by the shipping site management apparatus 62 when the product subject to management is measured by the measurement apparatus 61 in the shipping site 12. The date and time of issue stored in the product master 50 is, for example, the date and time when the shipping site management apparatus 62 issued the product ID. Further, the place of issue stored in the product master 50 includes the name and address of the shipping site 12, identification information for identifying the measurement apparatus 61 in the shipping site 12, etc.

The baggage master 52 manages a baggage ID for individually discriminating the baggage produced by packaging the product subject to management in a deliverable form. The baggage ID is assigned in minimum units of baggage handled when the product is delivered. For example, one baggage ID is assigned to one container that contains multiple tomatoes. The baggage ID is, for example, issued by the shipping site management apparatus 62 when the measurement apparatus 61 measures the baggage shipped at the shipping site 12. The baggage ID may be issued by the delivery management apparatus 68. For example, the baggage ID may be issued by the delivery management apparatus 68 when the delivery means 18 receives the baggage shipped from the shipping site 12. The baggage master 52 stores the product ID of the product included in the baggage, date and time of packaging, place of packaging, etc., using the product ID as a key. The baggage master 52 may store a container ID for individually discriminating the container for containing the product. The container ID is identification information assigned to a container such as a cardboard box and a small-sized container.

The production data 54 is data related to the production of the product subject to management. The production data 54 stores information such as the date and time of production, place of production, producer, etc., of the product using the product ID as a key. The production data 54 may store information related to the process of production of the product. The production data 54 may, for example, include information related to the fertilizer and agricultural chemical used to grow the tomato, an image capturing the tomato before maturity or the tomato just about to be harvested, etc. The production data 54 can be, for example, acquired from the producer of the product.

The delivery data 56 is data related to the delivery of the baggage produced by packaging the product. The delivery data 56 includes information such as the date and time of shipping the baggage, place of shipping, place of delivery, date and time of delivery, etc., using the product ID as a key. The delivery data 56 may include information related to the situation of delivery of the baggage and may include flag information such as before shipping, being shipped, and shipped. The delivery data 56 may include history information indicating in what place the product or the baggage was and at what date and time. The delivery data 56 can be acquired from the delivery management apparatus 68.

The characteristic data 58 is data indicating a characteristic of the product or the baggage subject to management. The characteristic data 58 is inclusive of data indicating a characteristic of the product, using the product ID as a key and includes data indicating a characteristic of the baggage, using the baggage ID as a key. The characteristic of the product is exemplified by the shape, size, color, surface pattern or damage, weight, sugar concentration, maturity grade, etc. of the product. The characteristic of the baggage is inclusive of a characteristic such as the shape, size, color, surface pattern or damage, and weight that can be measured while the baggage remains packaged and a characteristic such as the position and arrangement of multiple products in the baggage that can be measured when the baggage is unpackaged.

The characteristic of the product or the baggage is measured by the measurement apparatuses 61, 63, 65, and 67 provided in the shipping site 12, the intermediate site 14, the sales site 16, or the delivery means 18. The measurement apparatuses 61, 63, 65, and 67 include arbitrary sensors for measuring the characteristic of the product or the baggage. For example, the apparatuses include a camera, 3D scanner, weight sensor, spectrometer, temperature sensor, humidity sensor, gas sensor, acceleration sensor, etc. The measurement apparatuses 61, 63, 65, and 67 may be configured by an arbitrary apparatus, may be a device provided in each site, or a device such as a handy terminal and a smartphone that can be carried by an operator for use.

The shape and size of the product or the baggage can be measured by using a camera, a 3D scanner, etc. The color, surface pattern or damage of the product or the baggage can be measured by using a camera. The weight of the product or the baggage can be measured by using a weight sensor. The sugar concentration of the product can be measured by using a camera or a spectrometer, using near-infrared spectroscopy. The maturity grade of the product can be measured by using a camera. In the case of a tomato, the maturity grade is calculated based on the distribution of color on the surface of the tomato. The higher the proportion of green, the lower the maturity grade, and, the higher the proportion of red, the higher the maturity grade. The arrangement of multiple products in the baggage can be measured by using a camera. The characteristic of the product or the baggage may be measured on multiple dates or at multiple points of time and may change depending on the date and time of measurement. For this reason, the characteristic data 58 is stored, using the product ID or the baggage ID and the date and time of measurement as keys. Therefore, the characteristic data 58 may include, for one product ID or baggage ID, multiple items of data that differ in the date and time of measurement.

The environmental data 60 is data indicating an environment surrounding the product or the baggage subject to management. The environmental data 60 includes, for example, time series data for the temperature, humidity, gas concentration (e.g., concentration of oxygen, carbon dioxide, ethylene, etc.) of the surrounding environment in which the product or the baggage is placed, the impact (acceleration) exerted to the product or the baggage, etc. The environmental data 60 includes, for example, data in a period elapsed since the product was shipped in the shipping site 12 until it is sold in the sales site 16. The environment surrounding the product or the baggage may be measured by a sensor provided in the container containing the product or the package, or measured by a sensor provided in the loading platform of the truck delivering the product or in the shipping container, or measured by a sensor provided in the warehouse of the intermediate site 14 or the sales site 16 that stocks the product or the baggage temporarily. The environment surrounding the product may be measured by a sensor provided in the place of sale in the sales site 16 in which the product is on display. The environmental data 60 is stored, using the product ID or the baggage ID as a key, or using an ID for discriminating the place of measurement as a key. The ID for discriminating the place of measurement may be an ID for discriminating the loading platform of a truck or the shipping container, an ID for discriminating the warehouse of the intermediate site 14 or the sales site 16, an ID for discriminating the place of sale in the sales site 16, etc.

In the shipping site 12, the characteristic of the product 20 produced by the producer is measured by using the measurement apparatus 61. The measurement apparatus 61 measures the shape, size, color, surface pattern or damage, etc. of the product 20 by imaging the product 20 and acquiring an image. In the case the product is a tomato, the measurement apparatus 61 may measure the sugar concentration of the tomato by using a spectrometer or identify the maturity grade of the tomato based on the color of the tomato. The measurement apparatus 61 may be comprised of various sensors provided in an automatic sorting machine used for inspection and sorting of the product 20. The measurement apparatus 61 transmits the measured characteristic data and the date and time of measurement of the product 20 to the shipping site management apparatus 62.

When the shipping site management apparatus 62 acquires characteristic data for the new product 20 from the measurement apparatus 61, the shipping site management apparatus 62 issues a product ID for individually discriminating the product 20. The shipping site management apparatus 62 records the characteristic data and the date and time of measurement acquired from the measurement apparatus 61, using the issued product ID as a key. The shipping site management apparatus 62 transmits the product ID, characteristic data, date and time of measurement, and place of measurement of the product 20 to the product management apparatus 30. The shipping site management apparatus 62 may maintain the production data 54 for the product 20 or transmit the production data for the product 20 to the product management apparatus 30.

The product 20 is then contained in a container 24 in the shipping site 12. The product 20 having the product ID assigned thereto is contained in the container 24 such as a cardboard box and a small-sized container. A container ID is assigned to the container 24. For example, the container 24 is discriminated individually by a barcode 25 or an electronic tag. A label printed with information such as the barcode 25 may be pasted to the container 24. A barcode or a tag may not be attached to the container 24. The container 24 may be discriminated individually based on a visual characteristic of the container 24 such as the shape, size, color, and pattern or damage of the container 24.

The job of containing the product 20 in the container 24 is performed while the product 20 is being measured by the measurement apparatus 61 such as a camera and a sensor. For example, a robot may be used to contain the product 20 in the container 24, and a camera or a sensor provided in the robot may measure the characteristic of the product 20 and the container 24. The characteristic of the product 20 and the container 24 measured by the measurement apparatus 61 is transmitted from the measurement apparatus 61 to the shipping site management apparatus 62. By discriminating the product 20 and the container 24 individually and, at the same time, packaging the product 20, it is possible to link the container ID with the product ID in the shipping site management apparatus 62. In the illustrated example, multiple (12) products 20 are contained in one container 24, and multiple product IDs are linked to one container ID. Only one product 20 may be contained in one container 24.

The container 24 containing the product 20 is then packaged and is turned into a baggage 26 having a deliverable form. For example, the baggage 26 is completed by closing a lid of the container 24. A portion of the top of the container 24 of the baggage 26 of the illustrated example remains open in a deliverable form, and the product 20 in the container 24 is visible from outside even in a packaged state. The form of packaging the product 20 is not limited to the one illustrated. The baggage 26 may be packaged such that the top of the container 24 is completely closed, i.e., the product 20 in the container 24 is not visible from outside.

The characteristic of the baggage 26 is then measured by using the measurement apparatus 61 such as a camera and various sensors. The measurement apparatus 61 may measure the characteristic of the baggage 26 before packaging the baggage 26. For example, the measurement apparatus 61 may capture an image for identifying the arrangement of multiple products 20 in the container 24 before the baggage 26 is packaged. In the illustrated example, an image that allows identifying the arrangement of the multiple products 20 in the container 24 can be acquired by capturing an image of from above the baggage 26 after the baggage 26 is completed. The measurement apparatus 61 transmits the characteristic data for the baggage 26 to the shipping site management apparatus 62 along with the date and time of measurement. When the shipping site management apparatus 62 acquires the characteristic data for the new baggage 26 from the measurement apparatus 61, the shipping site management apparatus 62 issues a baggage ID for individually discriminating the baggage 26. The shipping site management apparatus 62 transmits the baggage ID, characteristic data, date and time of measurement, and place of measurement of the baggage 26 to the product management apparatus 30. The shipping site management apparatus 62 transmits the container ID of the container 24 forming the baggage 26 and the product ID of the multiple products 20 contained in the container 24 to the product management apparatus 30. The shipping site management apparatus 62 transmits the delivery data 56 for the baggage 26 to the product management apparatus 30.

The baggage ID may be issued by the delivery management apparatus 68 instead of the shipping site management apparatus 62. For example, the measurement apparatus 67 of the delivery means 18 may measure the characteristic data for the baggage 26, and the measured characteristic data for the baggage 26 may be transmitted from the measurement apparatus 67 to the delivery management apparatus 68 along with the date and time of measurement. The measurement apparatus 67 may, for example, be inclusive of a handy terminal provided with a camera, and the characteristic of the baggage 26 may be measured by using the camera of the handy terminal. When the delivery management apparatus 68 acquires the characteristic data for the new baggage 26 from the measurement apparatus 67, the delivery management apparatus 68 may issue a baggage ID for individually discriminating the baggage 26. In this case, the baggage ID may be a delivery number entered in a delivery slip, etc., issued by a delivery company. The delivery management apparatus 68 may transmit the baggage ID, characteristic data, date and time of measurement, and place of measurement of the baggage 26 to the product management apparatus 30. The delivery management apparatus 68 may transmit the delivery data 56 for the baggage 26 to the product management apparatus 30.

The baggage 26 shipped from the shipping site 12 is delivered by an arbitrary delivery means 18 to the intermediate site 14. An automobile such as a truck, railway, ship, aircraft, etc. can be used as the delivery means 18. In the delivery means 18, the measurement apparatus 67 measures the environment surrounding the product 20 or the baggage 26 and records the environmental data indicating the measured surrounding environment. The environmental data recorded by the measurement apparatus 67 is transmitted to the delivery management apparatus 68. The measurement apparatus 67 is inclusive of a temperature sensor, humidity sensor, gas sensor, acceleration sensor, etc. provided in, for example, the loading platform of a truck, and the environmental data is recorded by these various sensors. The delivery management apparatus 68 records the environmental data acquired from the measurement apparatus 67, using the product ID, the baggage ID, or the delivery ID discriminating the delivery means 18 as a key. The delivery management apparatus 68 transmits the environmental data 60 to the product management apparatus 30 along with the product ID, the baggage ID, or the delivery ID.

The intermediate site 14 is a vegetable and fruit market or a delivery center of a delivery company. The baggage 26 delivered to the intermediate site 14 is inspected in incoming inspection in the intermediate site 14. In incoming inspection in the intermediate site 14, the measurement apparatus 63 provided in the intermediate site 14 measures characteristic data for the baggage 26. The measurement apparatus 63 may include various sensors provided in a system for automatically sorting the baggage 26 or include a handy terminal used by an operator. The measurement apparatus 63 transmits the measured characteristic data for the baggage 26 to the intermediate site management apparatus 64 along with the date and time of measurement. The intermediate site management apparatus 64 transmits the baggage ID, characteristic data, date and time of measurement, and place of measurement of the baggage 26 to the product management apparatus 30.

In incoming inspection in the intermediate site 14, the measurement apparatus 63 may measure characteristic data for a product 21 inside the baggage 26. The product 21 inspected in incoming inspection in the intermediate site 14 is the same individual item as the product 20 shipped from the shipping site 12 but is handled as the product 21 separate from the product 20 shipped from the shipping site 12. When the intermediate site management apparatus 64 acquires the characteristic data for the product 21 from the measurement apparatus 63, the intermediate site management apparatus 64 issues a temporary ID for individually discriminating the product 21. The intermediate site management apparatus 64 issues a temporary ID for individually discriminating the product 21 based on the arrangement of the product 21 in the container 24, etc. The measurement apparatus 63 captures, for example, an image that allows identifying the arrangement of the product 21 in the container 24 by using a camera and transmits the image to the intermediate site management apparatus 64. The intermediate site management apparatus 64 recognizes multiple products 21 in the acquired image and issues temporary IDs sequentially to the multiple products 21, assigning a temporary ID of No. 1 to the product 21 located in the top left corner of the container 24, etc., scanning from top left to bottom right. The temporary ID issued in the intermediate site 14 to the product 21 differs from the product ID issued in the shipping site 12 to the product 20. The intermediate site management apparatus 64 transmits the baggage ID, temporary ID, characteristic data, date and time of measurement, and place of measurement of the product 21 to the product management apparatus 30.

The baggage 26 inspected in incoming inspection is stocked in the intermediate site 14 as necessary and is sorted and shipped according to the next destination of delivery (e.g., the sales site 16). In a period from incoming to shipment of the baggage, the measurement apparatus 63 may measure the environment surrounding the product 21 or the baggage 26. The measurement apparatus 63 may transmit the environmental data indicating the measured surrounding environment to the intermediate site management apparatus 64. The intermediate site management apparatus 64 may transmit the environmental data measured by the measurement apparatus 63 to the product management apparatus 30. Further, when the baggage 26 is shipped from the intermediate site 14, the characteristic data for the baggage 26 or the product 21 may be measured again by using the measurement apparatus 63 for outgoing inspection. The measurement apparatus 63 may transmit the characteristic data for the baggage 26 or the product 21 measured in outgoing inspection to the intermediate site management apparatus 64. The intermediate site management apparatus 64 may transmit the characteristic data for the baggage 26 or the product 21 measured in outgoing inspection to the product management apparatus 30, mapping the characteristic data to the baggage ID, temporary ID, date and time of measurement, and place of measurement of the product 21.

The baggage 26 shipped from the intermediate site 14 is delivered to the sales site 16 by using an arbitrary delivery means 18. In the delivery means 18 headed to the sales site 16, too, the environment surrounding the product 21 or the baggage 26 may be measured by the measurement apparatus 67, and the environmental data indicating the measured surrounding environment may be transmitted to the product management apparatus 30 via the delivery management apparatus 68.

A product 22 delivered to the sales site 16 is inspected in incoming inspection by using the measurement apparatus 65 in the sales site 16. The measurement apparatus 65 is, for example, inclusive of a handy scanner used by a seller, and the characteristic data for the product 22 or the baggage 26 is measured by the handy scanner. The product 22 inspected in incoming inspection in the sales site 16 is the same individual item as the product 20 shipped from the shipping site 12 and the product 21 inspected in the intermediate site 14 but is handled as the product 22 separate from the product 20 in the shipping site 12 or the product 21 in the intermediate site 14.

In incoming inspection in the sales site 16, the characteristic data for the baggage 26 is first measured by the measurement apparatus 65. The measurement apparatus 65 transmits the characteristic data for the baggage 26 measured in incoming inspection to the sales site management apparatus 66. The sales site management apparatus 66 transmits the baggage ID, characteristic data, date and time of measurement, and place of measurement of the baggage 26 to the product management apparatus 30. The baggage 26 is then unpacked, and the multiple products 22 contained in the container 24 are measured by the measurement apparatus 65. The sales site management apparatus 66 issues temporary IDs for individually discriminating the multiple products 22 measured by the measurement apparatus 65. The temporary ID issued in the sales site 16 to the product 22 may be identical to the temporary ID assigned in the intermediate site 14 to the product 21.

The characteristic of the product 22 retrieved from the container 24 in the sales site 16 is then measured. For example, the arrangement of the multiple products 22 in the container 24 and the characteristic of the product 22 may be measured concurrently by retrieving the multiple products 22 from the container 24 while making measurements with the camera or the sensor provided in the handy scanner. The characteristic data for the product 22 measured by the measurement apparatus 65 is transmitted to the sales site management apparatus 66. The sales site management apparatus 66 transmits the characteristic data for the product 22 to the product management apparatus 30, linking the characteristic data with the baggage ID, temporary ID, date and time of measurement, and place of measurement. The products 22 inspected in incoming inspection in the sales site 16 are arranged and sold in the place of sale in the sales site 16. The environment surrounding the product 22 may be measured by the measurement apparatus 65 in the sales site 16. For example, the measurement apparatus 65 includes a sensor provided in the warehouse or the place of sale in the sales site 16. The environment surrounding the product 22 is measured by the sensor provided in the warehouse or the place of sale. The measurement apparatus 65 transmits the measured environmental data indicating the surrounding environment to the sales site management apparatus 66. The sales site management apparatus 66 transmits the environmental data acquired from the measurement apparatus 65 to the product management apparatus 30.

A consumer visiting the sales site 16 captures an image of the product 22 arranged in the place of sale in the sales site 16 with the user terminal 28 of the consumer such as a smartphone provided with a camera. An application that can be used in the sales site 16 is installed in the user terminal 28, and the product 22 is imaged via the application. The user terminal 28 transmits the captured image of the product 22, date and time of imaging, and place of imaging (e.g., the location of the sales site 16) to the product management apparatus 30 via the network 70. The product management apparatus 30 individually discriminates the product 22 based on the information from the user terminal 28 and identifies the product ID of the product 20 that is identical to the product 22. The product management apparatus 30 transmits data related to the production and shipment of the product 20 to the user terminal 28 based on the product ID of the identified product 20. The user terminal 28 displays the data related to the product 20 acquired from the product management apparatus 30. The consumer can know the production data, delivery data, and environmental data mapped to the product 22 at hand, by seeing the user terminal 28.

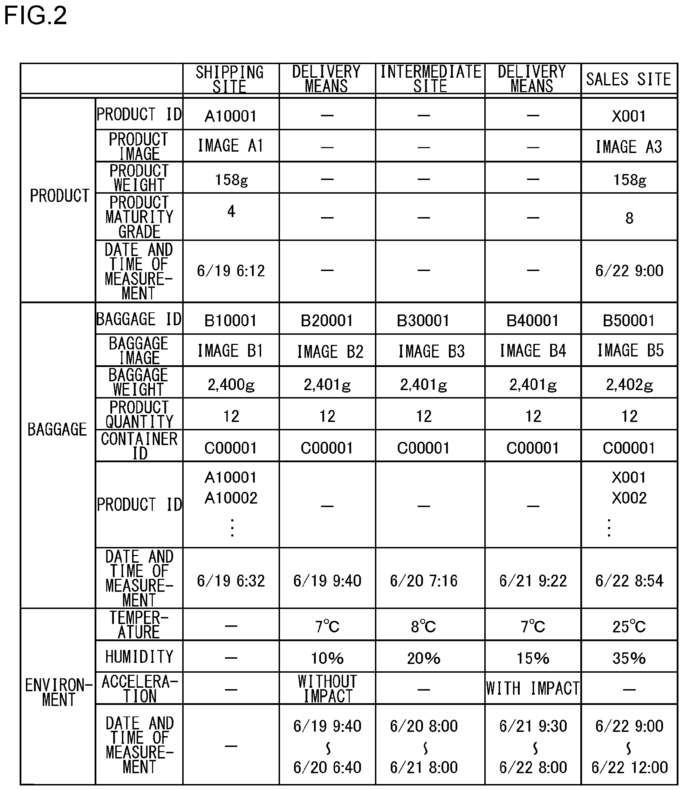

Fig. 2 shows an example of data acquired by the product management apparatus 30. Fig. 2 shows the data that the product management apparatus 30 acquires from the shipping site 12, the intermediate site 14, the sales site 16, and the delivery means 18 shown in Fig. 1 arranged from left to right in the chronological order. Fig. 2 shows representative data for ease of understanding and does not cover all data acquired by the product management apparatus 30 exhaustively.

First, the product management apparatus 30 acquires the data in the shipping site 12. The product management apparatus 30 acquires, as the data for the product 20, the product ID, product image, product weight, maturity grade of the product, and date and time of measurement from the shipping site management apparatus 62. The product ID is issued by the shipping site management apparatus 62. The product image represents characteristic data for identifying the shape, size, color, etc. of the product 20 and is captured by the camera provided in the measurement apparatus 61. The product weight represents characteristic data for the product 20 and is measured by the weight sensor provided in the measurement apparatus 61. The maturity grade of the product represents characteristic data for the product 20 and is identified by the measurement apparatus 61 based on the color distribution of the product 20 in an image A1 capturing the product 20. The date and time of measurement represents the date and time when the product image, product weight, or maturity grade of the product was measured by the measurement apparatus 61. Fig. 2 shows only one representative date and time of measurement, but the date and time of measurement may be individually set for each of the product image, product weight, and maturity grade of the product.

The product management apparatus 30 acquires, as the data for the baggage 26, the baggage ID, baggage image, baggage weight, product quantity, container ID, product ID, and date and time of measurement from the shipping site management apparatus 62. The baggage ID is issued by the shipping site management apparatus 62. The baggage image, baggage weight, and product quantity represent characteristic data for the baggage 26. The container ID is information shown in the barcode 25 assigned to the container 24 of the baggage 26. The product ID is the product ID of each of the multiple products 20 included in the baggage 26. When multiple (e.g., 12) products 20 are contained in the baggage 26, multiple (e.g., 12) product IDs are linked with one baggage ID. The date and time of measurement represents the date and time when the baggage image, baggage weight, or product quantity was measured by the measurement apparatus 61. Fig. 2 shows only one representative date and time of measurement, but the date and time of measurement may be individually set for each of the baggage image, baggage weight, or product quantity.

The product management apparatus 30 then acquires data in the delivery means 18. The product management apparatus 30 acquires, as the data for the baggage 26, the baggage ID, baggage image, baggage weight, product quantity, container ID, and date and time of measurement from the delivery management apparatus 68. The baggage ID is issued by the delivery management apparatus 68. The baggage image, baggage weight, and product quantity are measured by the measurement apparatus 67. When the content of the baggage 26 cannot be seen, the product quantity may not be measured. The product management apparatus 30 acquires, as the environmental data, the temperature, humidity, and acceleration from the delivery management apparatus 68. The temperature, humidity, and acceleration are measured by the measurement apparatus 67. The date and time in the environmental data is a period in which the temperature, humidity, and acceleration were measured and, for example, includes the date and time of start and the date and time of end of the measurement. The baggage 26 is not normally opened to measure the individual product in the delivery means 18 so that the data for the individual product is not acquired.

The product management apparatus 30 then acquires the data in the intermediate site 14. The product management apparatus 30 acquires, as the data for the baggage 26, the baggage ID, baggage image, baggage weight, product quantity, container ID, and date and time of measurement from the intermediate site management apparatus 64. The baggage ID is issued by the intermediate site management apparatus 64. The baggage image, baggage weight, and product quantity are measured by the measurement apparatus 63. In the intermediate site 14, the temperature and humidity as environmental data are measured by the measurement apparatus 63 and transmitted from the intermediate site management apparatus 64 to the product management apparatus 30. The temperature and humidity are, for example, measured in the warehouse for stocking the baggage 26 in the intermediate site 14.

Finally, the product management apparatus 30 acquires the data in the sales site 16. The product management apparatus 30 acquires, as the data for the baggage 26, the baggage ID, baggage image, baggage weight, product quantity, container ID, and date and time of measurement from the sales site management apparatus 66. The baggage ID is issued by the sales site management apparatus 66. The baggage image, baggage weight, and product quantity are measured by the measurement apparatus 65. In the sales site 16, the content of the baggage 26 is examined, and the product IDs (temporary IDs) are issued to the multiple products 22 contained in the baggage 26. The temporary ID is issued by the sales site management apparatus 66. The product management apparatus 30 then acquires, as the data for the product 22, the product image, product weight, maturity grade of the product, and date and time of measurement from the sales site management apparatus 66. The product management apparatus 30 acquires, as the environmental data, the temperature and humidity from the sales site management apparatus 66. The temperature and humidity are measured in the warehouse for stoking the product 22 in the sales site 16 or the place of sale in which the product 22 is displayed in the sales site 16.

A description will now be given of a determination of identity of a product made by the determination unit 34. The determination unit 34 checks the data related to the product stored in the storage unit 40 (also referred to as the first product) against the data related to the product acquired by the acquisition unit 32 (also referred to as the second product) and determines whether the first product and the second product are identical. The data acquired by the acquisition unit 32 is data related to the second product subject to determination as to identity and is raw data derived from actually measuring the second product found at a site of the distribution process. Meanwhile, the data stored in the storage unit 40 is data related to the first product discriminated individually at least at the time of production or at the time of shipping and is data that serves as a reference for identity determination. The data stored in the storage unit 40 may include the data acquired in the intermediate site 14 or the sales site 16, and the data acquired in the intermediate site 14 or the sales site 16 may be used as a reference for identity determination.

The determination unit 34 makes a determination as to the identity of an individual product. For example, the determination unit 34 may verify the identity of a product by determining whether the product 22 sold in the sales site 16 is identical to one of the products 20 registered in the product master 50. The determination unit 34 may verify the identity of a product packaged in the baggage 26 by making a determination as to the identity of the baggage 26 in the distribution process.

The determination unit 34 includes a candidate extraction unit 42, an individual discrimination unit 44, and a change verification unit 46.

The candidate extraction unit 42 extracts data to be checked from the data stored in the storage unit 40. The candidate extraction unit 42 determines whether the object subject to determination is an individual product or a baggage containing a product, based on the characteristic data acquired by the acquisition unit 32. When the object subject to determination is an individual product, the candidate extraction unit 42 identifies a product name (e.g., tomato) of the second product subject to determination, based on an image of the second product acquired by the acquisition unit 32, etc. When the object subject to determination is a baggage and when the characteristic data acquired for the baggage by the acquisition unit 32 comprises characteristic data related to the content of the baggage, the candidate extraction unit 42 may identity a product name of the content of the baggage based on the characteristic data related to the content of the baggage.

The candidate extraction unit 42 extracts the product ID or the baggage ID to be checked, based on the date and time or place. The data acquired by the acquisition unit 32 includes the date and time of measurement and place of measurement in which the characteristic of the product or the baggage was measured. The product or the baggage to be checked will be the product or the baggage that actually existed at the date and time of measurement and place of measurement included in the acquired data. The candidate extraction unit 42 extracts the delivery data 56 in the storage unit 40, extracts the baggage ID that matches a condition for the date and time of measurement and place of measurement of the acquired data, and extracts the product ID mapped to the baggage ID. When the data acquired by the acquisition unit 32 includes the baggage ID, the candidate extraction unit 42 may define that the baggage ID acquired by the acquisition unit 32 should be checked and that the product ID mapped to the baggage ID acquired by the acquisition unit 32 should be checked.

The individual discrimination unit 44 discriminates the baggage or the product individually. The individual discrimination unit 44 defines the product ID or the baggage ID extracted by the candidate extraction unit 42 as the subject of individual discrimination. The individual discrimination unit 44 calculates a score indicating a level of matching between the characteristic data acquired by the acquisition unit 32 and the characteristic data recorded in the storage unit 40 and identifies the product ID or the baggage ID with the highest score. The individual discrimination unit 44 uses a machine learning mode for outputting a score indicating a level of matching of characteristics, based on correlation between the characteristic data. In this way, the individual discrimination unit 44 identifies the product ID or the baggage ID of the product measured at the site corresponding to the data acquired by the acquisition unit 32.

The individual discrimination unit 44 may allow for a change in the characteristic with time instead of simply comparing the characteristic data acquired by the acquisition unit 32 with the characteristic data 58 in the storage unit 40. In other words, the individual discrimination unit 44 may allow for a time elapsed since the date and time of measurement of the characteristic data 58 recorded in the storage unit 40 (also referred to as the first date and time) until the date and time of measurement of the characteristic data acquired by the acquisition unit 32 (also referred to as the second date and time). The individual discrimination unit 44 may estimate a change in the characteristic with time from the first date and time to the second date and time. When a tomato becomes ripe with time, for example, a change in the characteristic of a tomato such as the color, sugar concentration, maturity grade, etc. may be estimated. For example, tinging of the tomato with red, an increase in the sugar concentration of the tomato, or an increase in the maturity grade may be estimated. The individual discrimination unit 44 estimates a change in the characteristic of the product by, for example, referring to change estimation data that maps the elapsed time with the amount of change in the characteristic such as color, sugar concentration, and maturity grade of the product.

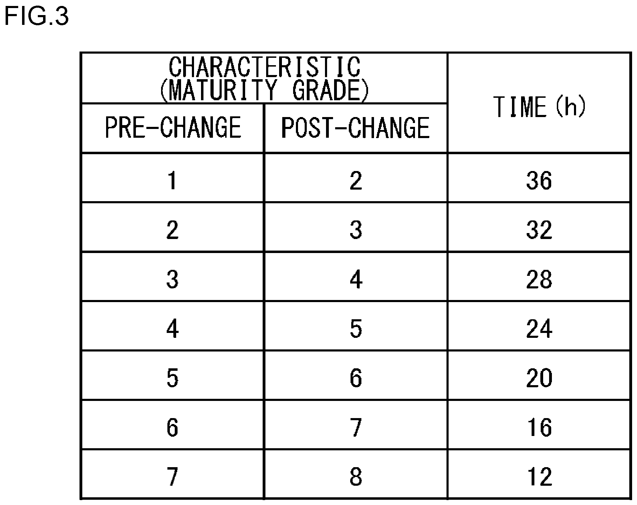

Fig. 3 schematically shows an example of change estimation data. Fig. 3 shows change estimation data that maps a change in maturity grade of the product to the time necessary for the change in maturity grade. In the example of Fig. 3, the maturity grade of a tomato is defined in 8 stages. The maturity grade of a tomato can be defined in accordance with the distribution of the color of the tomato. The larger the proportion of green, the lower the maturity grade, and, the larger the proportion of red, the higher the maturity grade. For example, an entirely green tomato has a maturity grade 1, and an entirely red ripe tomato has a maturity grade 8. Fig. 3 defines the time necessary for each of the stages 1-7 of maturity grade to change to the next stage 2-8. For example, 44 hours is defined as the time for a change from the maturity grade 1 to the maturity grade 8, and 20 hours is defined as the time for a change from the maturity grade 7 to the maturity grade 8. The number of stages of maturity grade and the value of time necessary for the maturity grade to change are defined individually in accordance with the product type.

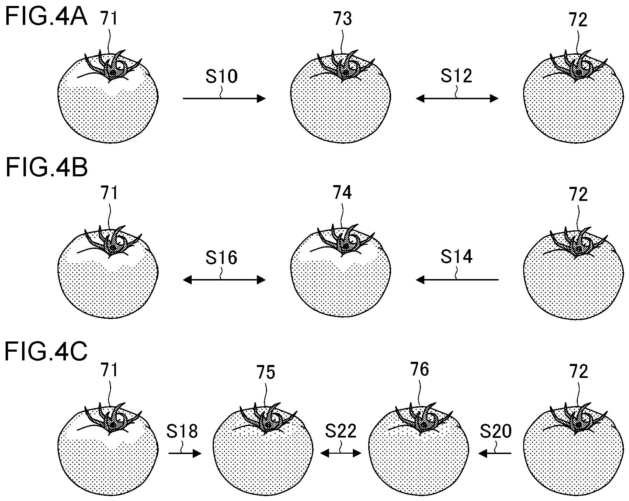

The individual discrimination unit 44 uses the characteristic of the product at the first date and time, the time elapsed since the first date and time until the second date and time, and the change estimation data to estimate the characteristic of the product at the second date and time. In the example shown in Fig. 2, the maturity grade of the product 20 measured in the shipping site 12 is "4", and the first date and time is "6:12 on June 19". Given that the second date and time is the date and time of measurement "9:00 on June 22" in the sales site 16, the time elapsed since the first date and time until the second date and time is about 75 hours. According to the change estimation data of Fig. 4, the time required for a change from the maturity grade 4 to the maturity grade 8 is 24+20+16+12=72 hours. It is therefore estimated that the maturity grade of the product 22 at the second date and time is "8".

The individual discrimination unit 44 may estimate a change in the characteristic with time by using the environmental data acquired by the acquisition unit 32 or the environmental data 60 in the storage unit 40. For example, the speed or tendency of change in the characteristic of the product varies if the temperature, humidity, gas concentration, etc., in the environment surrounding the product varies. The individual discrimination unit 44 may estimate a change in the characteristic of the product based on the environment in which the product is placed in a period from the first date and time to the second date and time. Referring to the change estimation data of Fig. 3, for example, the elapsed time may be defined by a function that takes temperature, humidity, gas concentration, etc. as variables. The individual discrimination unit 44 may estimate a change in the characteristic by using a machine learning model that receives the characteristic data and the environmental data as inputs and outputs the post-change characteristic data. This makes individual discrimination possible in such a manner that changes in color, sugar concentration, maturity grade, etc. with time are properly considered.

Fig. 4A-4C schematically shows a method of determining identity by estimating a change in the characteristic of a first product 71 or a second product 72. The first product 71 is provided with, for example, the characteristic of the product at a point of time when it is shipped from the shipping site 12. The neighborhood of the calyx of the tomato is tinged with a greenish color. The second product 72 is provided with the characteristic of the product at a point of time when it is sold in the sales site 16. The neighborhood of the calyx of the tomato is tinged with a reddish color. Therefore, the proportion of red is increased and the maturity grade is increased in the second product 72 as compared with the first product 71.

In the example of Fig. 4A, a virtual third product 73 provided with the characteristic at the second date and time is estimated based on the characteristic data for the first product 71 recorded in the storage unit 40 and measured at the date and time (S10). For example, the characteristic (e.g., color) of the third product 73 at the second date and time is estimated based on the characteristic (e.g., color) of the first product 71 at the first date and time, the time elapsed since the first date and time until the second date and time, and the change estimation data. The individual discrimination unit 44 determines the characteristic provided in the virtual third product 73 by estimating a change in the characteristic in a temporally forward direction from the first date and time to the second date and time. The individual discrimination unit 44 makes individual discrimination by calculating a score indicating a level of matching between the characteristic data for the second product 72 acquired by the acquisition unit 32 and measured at the second date and time and the estimated characteristic data for the third product 73 (S12). In other words, individual discrimination is made by using the characteristic data for the third product 73 in which the estimated change from the characteristic data for the first product 71 is allowed for. In this case, a low score indicating a level of matching is calculated when the characteristic data for the first product 71 and the characteristic data for the second product 72 match strictly. A high score indicating a level of matching is calculated for the characteristic data in which the change with time is properly allowed for.

In the example of Fig. 4B, a change in the characteristic is estimated in a temporally backward direction from the second date and time to the first date and time, contrary to the case of Fig. 4A. In other words, the individual discrimination unit 44 estimates a virtual fourth product 74 provided with the characteristic of the product at the first date and time, based on the characteristic data for the second product 72 acquired by the acquisition unit 32 and measured at the second date and time (S14). For example, the characteristic (e.g., color) of the fourth product 74 at the first date and time is estimated based on the characteristic (e.g., color) of the second product 72 at the second date and time, the time counted backward from the second date and time to the first date and time, and the change estimation data. The individual discrimination unit 44 makes individual discrimination by calculating a score indicating a level of matching between the estimated characteristic data for the fourth product 74 and the characteristic data for the first product 71 stored in the storage unit 40 and measured at the first date and time (S16). In other words, individual discrimination is made by using the characteristic data for the fourth product 74 in which the estimated change from the characteristic data for the second product 72 is allowed for. In this case, too, a low score indicating a level of matching is calculated when the characteristic data for the first product 71 and the characteristic data for the second product 72 match strictly. A high score indicating a level of matching is calculated for the characteristic data in which the change with time is properly allowed for.

In the example of Fig. 4C, the characteristic at a date and time between the first date and time and the second date and time (also referred to as a third date and time) is estimated. The individual discrimination unit 44 estimates a virtual fifth product 75 provided with the characteristic of the product at the third date and time, based on the characteristic data for the first product 71 recorded in the storage unit 40 and measured at the first date and time (S18). For example, the characteristic (e.g., color) of the fifth product 75 at the third date and time is estimated based on the characteristic (e.g., color) of the first product 71 at the first date and time, the time elapsed since the first date and time until the third date and time, and the change estimation data. The individual discrimination unit 44 estimates a sixth product 76 provided with the characteristic of the product at the third date and time, based on the characteristic data for the second product 72 acquired by the acquisition unit 32 and measured at the second date and time (S20). For example, the characteristic (e.g., color) of the sixth product 76 at the third date and time is estimated based on the characteristic (e.g., color) of the second product at the second date and time, the time counted backward from the second date and time to the third date and time, and the change estimation data. The individual discrimination unit 44 makes individual discrimination by calculating a score indicating a level of matching between the estimated characteristic data for the fifth product 75 at the third date and time and the estimated characteristic data for the sixth product 76 at the third date and time (S22). In this case, too, a low score indicating a level of matching is calculated when the characteristic data for the first product and the characteristic data for the second product 72 match strictly. A high score indicating a level of matching is calculated for the characteristic data in which the change with the time is properly allowed for.

Estimation of a change in the characteristic according to the scheme described above is limited to characteristics for which a change with time is predictable. Of the characteristics of a tomato, for example, changes in color, maturity grade, sugar concentration, etc. are estimated. With regard to those characteristics not considered to change with time, the pre-estimation characteristic data and the post-estimation characteristic data are assumed to be identical. Of the characteristics of a tomato, for example, the shape, size, weight, etc. are not considered to change.

An unpredictable change may occur in the product. For example, changes such as a damage during the delivery of the product and a partial deficiency of the product are difficult to predict. Meanwhile, the product may be damaged or a part of the product may be deficient at the time of shipping. In this case, a damage or a deficiency found in the product may be a characteristic useful for individual discrimination of the product. Thus, when the characteristic data for the second product 72 acquired by the acquisition unit 32 includes a characteristic feature indicating a damage or a deficiency of the product, the individual discrimination unit 44 may first make individual discrimination by using the characteristic damage or deficiency. When there are no products for which the characteristic damage or deficiency match, the individual discrimination unit 44 may make individual discrimination by excluding the characteristic damage or deficiency. By making individual discrimination by using the characteristic damage or deficiency initially, it is possible to identify a product with a damage or a deficiency at the time of shipping. By then making individual discrimination by excluding the characteristic damage or deficiency, it is possible to identify a product without a damage or a deficiency at the time of shipping, based on a characteristic different from a damage or a deficiency.

Instead of employing or excluding the characteristic damage or deficiency described above, the magnitude of impact from the characteristic damage or deficiency on the score indicating a level of matching may be switched, namely, the numerical value of the parameter in the machine learning model may be switched. For example, individual discrimination may be made by initially adjusting the parameter so that the magnitude of impact from a particular characteristic feature such as a damage and a deficiency and calculating a score indicating a level of matching accordingly. Individual discrimination may then be made by adjusting the parameter to lower the magnitude of impact from a particular characteristic feature such as a damage or a deficiency and calculating a score indicating a level of matching accordingly.

The magnitude of impact may also be adjusted not only for unpredictable characteristics but also for predictable characteristics. The magnitude of impact from characteristics for which a change with time is considered to be small (e.g., the shape, size, weight, etc. of a tomato) on the score indicating a level of matching may be configured to be large. More particularly, a greater weight is assigned to the characteristic for which a change with time is small in a determination as to the identity of a product to give higher priority to the characteristic for which a change with time is small. The magnitude of impact from characteristics for which a change with time is considered to be large (e.g., the color, maturity grade, sugar concentration, etc. of a tomato) on the score indicating a level of matching may be configured to be small. More particularly, a smaller weight is assigned to the characteristic for which a change with time is large in a determination as to the identity of a product to give lower priority to the characteristic for which a change with time is small. The criterion for determination as to identity is stricter for the characteristic having a higher priority. Unless a strict match is found in the characteristic, it is determined that the products are not identical. The criterion for determination as to identity is less strict for the characteristic having a higher priority. Even if a strict match is not found in the characteristic, it is determined that the products are not identical. In other words, the magnitude of the tolerance range in which identity is found varies depending on the magnitude of priority of the characteristic of the product. The magnitude of priority of each of the multiple characteristics of the product is defined individually in accordance with the product type.

The method of individually discriminating a product described above may be used equally for individual discrimination of the baggage. When the product in the container is visible while the baggage remains packaged, the individual discrimination unit 44 may determine the identity of the product in the container by estimating a change in the characteristic of the product in the container. When multiple products are in the container, the individual discrimination unit 44 may discriminate the product individually by estimating a change in the characteristic of each of the multiple products. Alternatively, the individual discrimination unit 44 may individually discriminate the baggage as a whole by estimating a change in the characteristics of the multiple products collectively.

The change verification unit 46 extracts a change in the characteristic between the first product and the second product identified by the individual discrimination unit 44 as being identical to find out whether the change in the characteristic is valid. When there is only a change that could occur with time (for example, when a green color of a tomato changes to a red color or when a new damage is added to the surface of a tomato), the change verification unit 46 determines that the change is valid. When there is a change that could not occur with time (e.g., when a red color of a tomato changes to a green color, or a damage found in the past has disappeared), it is determined that the change is not valid.

When the change verification unit 46 determines that the change between the first product and the second product is valid, the change verification unit 46 determines that the first product and the second product identified by the individual discrimination unit 44 are identical. Thus, the second product subject to determination as to identity is linked to the product ID of the first product identified by the individual discrimination unit 44. When the change verification unit 46 determines that the change between the first product and the second product is not valid, the change verification unit 46 determines that the first product identical on an individual basis to the first product subject to determination as to identity.

The change verification unit 46 may not only verify the validity of a change for the first product for which the score calculated by the individual discrimination unit 44 is highest but also verify the validity of a change for multiple first products for which the score calculated by the individual discrimination unit 44 is equal to or higher than a predetermined threshold value. In this case, the first product for which the change is valid and the score is relatively high may be determined to be identical on an individual basis to the second product.

The notification unit 36 communicates information based on a determination by the determination unit 34 as to identity to the source of transmission of the data acquired by the acquisition unit 32. When, for example, data related to the product 22 is acquired by the acquisition unit 32 from the user terminal 28 of a consumer visiting the sales site 16, information related to the product ID of the product 22 identified by the determination unit 34 is communicated to the user terminal 28. In other words, information based on the production data 54, the delivery data 56, the characteristic data 58, and the environmental data 60 linked to the identified product ID is communicated to the user terminal 28. More particularly, the notification unit 36 may communicate information related to production such as the producer, place of production, and date and time of production of the product 22, information related to delivery such as the delivery route and time required for delivery of the product 22, information related to the quality of the product such as the maturity grade and sugar concentration, and peak ripeness timing of the product 22, and information related to environment such as the temperature and humidity in which the product 22 was placed. These items of information that are requested by a consumer may be communicated in response to the consumer's user operation in the user terminal 28.

The notification unit 36 may communicate information based on the determination by the determination unit 34 as to identity to the intermediate site 14 or the sales site 16. When the acquisition unit 32 acquires the characteristic data for the baggage 26 measured in incoming inspection or outgoing inspection in the intermediate site 14 from the intermediate site management apparatus 64, for example, the notification unit 36 may communicate the result of determination as to the identity of the baggage 26 made by the determination unit 34 to the intermediate site management apparatus 64. This makes it possible to conduct stricter inspection simply by measuring the characteristic data for the baggage 26 for inspection in the intermediate site 14 for checking against the characteristic data for the baggage 26 at the time of shipping. Similarly, when the acquisition unit 32 acquires the characteristic data for the baggage 26 or the product 22 measured in the sales site 16 in incoming inspection from the sales site management apparatus 66, the notification unit 36 may communicate the result of determination as to the identity of the baggage 26 or the product 22 made by the determination unit 34 to the sales site management apparatus 66. This makes it possible to inspect the safety of the product more strictly before displaying the product 22 in the sales site 16.

The recording unit 38 generates data for recording in the storage unit 40 based on the data acquired by the acquisition unit 32 and records the generated data in the storage unit 40. The recording unit 38 registers a new product ID in the product master 50 based on the data acquired from the shipping site management apparatus 62. The recording unit 38 registers a new baggage ID in the baggage master 52 based on the data acquired from the shipping site management apparatus 62. The recording unit 38 generates and records the production data 54 based on the data acquired from the shipping site management apparatus 62 or the producer. The recording unit 38 generates and records the delivery data 56 based on the data acquired from the shipping site management apparatus 62, the intermediate site management apparatus 64, the sales site management apparatus 66, or the delivery management apparatus 68. The recording unit 38 generates and records the environmental data 60 based on the data acquired from the shipping site management apparatus 62, the intermediate site management apparatus 64, the sales site management apparatus 66, or the delivery management apparatus 68.

The recording unit 38 generates and records the characteristic data 58 linked to the new product ID or baggage ID based on the characteristic data acquired from the shipping site management apparatus 62. When the recording unit 38 acquires the characteristic data from the intermediate site management apparatus 64, the sales site management apparatus 66, or the user terminal 28, the recording unit 38 generates and records the characteristic data 58 when the determination unit 34 determines that the product or the baggage is identical. In other words, when the determination unit 34 finds an identity and the product ID or the baggage ID acquired by the acquisition unit 32 is identified, the recording unit 38 records the acquired characteristic data in the storage unit 40, linking the characteristic data with the identified product ID or baggage ID. As a result, additional characteristic data acquired in the middle of the distribution process is collected, as the characteristic data 58, in the storage unit 40, in addition to the initially registered characteristic data.

To determine whether the first product and the second product are identical, the determination unit 34 may use multiple items of characteristic data acquired for the first product at different dates and points of time of measurement and at different places of measurement or may use only the latest characteristic data. When the identity of a product is determined based on the characteristic data for the second product acquired from the user terminal 28, for example, the characteristic data measured by the measurement apparatus 61 in the shipping site 12 may be used, the characteristic data measured by the measurement apparatus 63 in the intermediate site 14 may be used, or the characteristic data measured by the measurement apparatus 65 in the sales site 16 may be used. The determination unit 34 may estimate a change in the characteristic based on multiple items of characteristic data acquired at different dates and points of time of measurement and at different places of measurement.

The change verification unit 46 may verify the validity of a change based on multiple items of characteristic data acquired at different dates and points of time of measurement and at different places of measurement. The change verification unit 46 may determine a point of time when a particular change occurs based on multiple items of characteristic data acquired at different dates and points of time of measurement and at different places of measurement. When a change accompanying a damage or a deficiency is verified, for example, the change verification unit 46 may identify the date and time and place in which the damage or the deficiency likely occurred. When a change in the characteristic of the product, and, more particularly, a monotonous increase in the maturity grade or sugar concentration of the product is verified, the change verification unit 46 may identify the date and time when the ripeness of the product is at the peak based on the tendency of increase. When it is verified that an increase in the maturity grade or sugar concentration of the product has stopped or the maturity grade or sugar concentration has lowered, the change verification unit 46 may communicate that the peak ripeness is over based on the tendency in increase. Information related to a change in the characteristic like this verified by the change verification unit 46 may be communicated by the notification unit 36 to the source of transmission of the data.

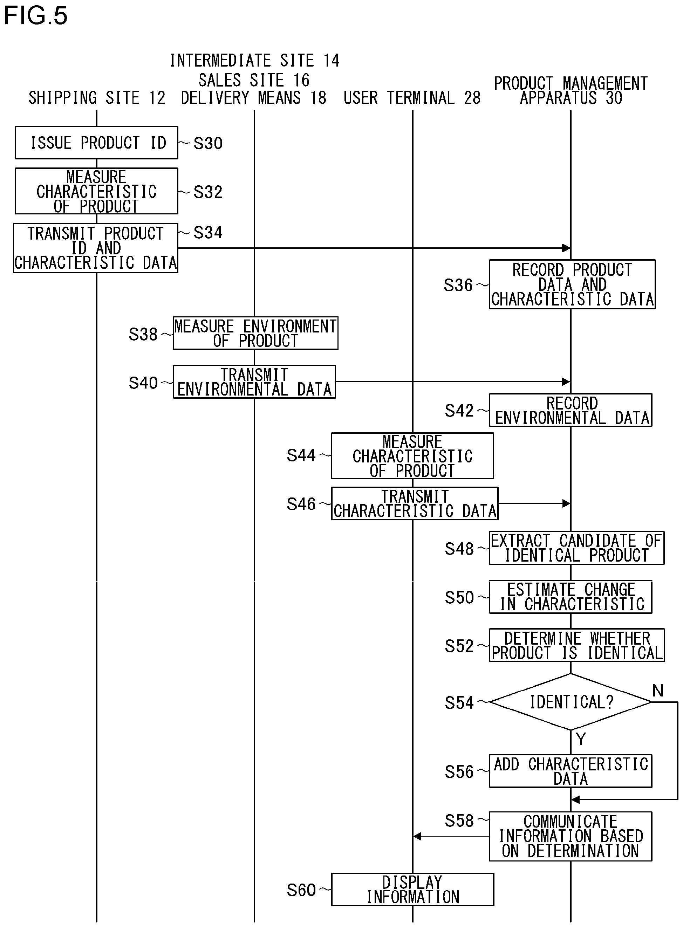

Fig. 5 is a sequence chart showing an exemplary operation of the product management apparatus 30. First, the shipping site management apparatus 62 issues the product ID in the shipping site 12 (S30), the characteristic of the product is measured by the measurement apparatus 61 (S32), and the product ID and the characteristic data are transmitted from the shipping site management apparatus 62 to the product management apparatus 30 (S34). The product management apparatus 30 registers the acquired product ID in the product master 50 and records the characteristic data 58 generated based on the acquired characteristic data in the storage unit 40 (S36).

The product shipped from the shipping site 12 is delivered by the delivery means 18 to the intermediate site 14 or the sales site 16. The measurement apparatus 63, 65, or 67 measures the environment of the product in the intermediate site 14, the sales site 16, or the delivery means 18 (S38). The intermediate site management apparatus 64, the sales site management apparatus 66, or the delivery management apparatus 68 transmits the environmental data to the product management apparatus 30 (S40). The product management apparatus 30 records the acquired environmental data 60 in the storage unit 40 (S42).

The user terminal 28 then measures the characteristic of the product (S44), and the user terminal 28 transmits the characteristic data to the product management apparatus 30 (S46). The product management apparatus 30 extracts the candidate product ID that could indicate the identical product (S48), estimates a change in the characteristic of the product (S50), and determines whether the product is identical, based on the acquired data (S52). When the product is identical (Y in S54), the product management apparatus 30 records the characteristic data 58 generated based on the acquired characteristic data in the storage unit 40 (S56) and communicates information based on the determination as to identity to the user terminal 28 (S58). When the product is not identical (N in S54), the process in S56 is skipped, and information based on the determination as to identity is communicated (S58). The user terminal 28 displays the information acquired from the product management apparatus 30 (S60).

According to the embodiment, it is possible to discriminate the product individually based on the characteristic data for the product so that the product can be managed individually. Further, even in a case in which the characteristic of the product changes with time, the identity of the individual product can be determined in a manner that a change in the characteristic with time is allowed for, by estimating a change in the characteristic of the product. Further, even in a case in which an unpredictable change in the characteristic not caused by an elapse of time occurs, the identity of the individual product can be determined by combining individual discrimination using the unpredictable characteristic and individual discrimination excluding the unpredictable characteristic. Further, the identity of the individual product can be properly determined even when the characteristic of the product changes with time, by setting, for each product type, a priority to multiple characteristics used in determination of identity.

According to the embodiment, a change in the product occurring in the middle of the distribution process can be properly tracked by collecting characteristic data acquired in the middle of the distribution process. When a damage is incurred in the middle of the distribution process, the date and time or the place in which the damage likely occurred can be identified. Further, even when a product is replaced by another product in the middle of the distribution process, the post-replacement product can be properly tracked by using the characteristic data for the product, if the replacement is between products registered in the product management apparatus 30. When a product is replaced by a product not registered in the product management apparatus 30, an identity cannot be found with the characteristic of the product registered in the product management apparatus 30 so that a wrongdoing in the distribution process can be detected.

Described above is an explanation based on an exemplary embodiment. The present invention is not limited to the embodiments described above, and it will be understood by those skilled in the art that various design changes are possible and various modifications are possible and that such modifications are also within the scope of the present invention.

In the embodiment described above, the information related to the product is provided to the consumer by using the user terminal 28 of the consumer. In an alternative embodiment, the information related to the product may be provided by using a terminal installed at a place of sale or a cash register in the sales site 16. For example, a terminal installed in the sales site 16 may measure the product, and the information related to the product may be displayed on the display unit of the terminal. Alternatively, when the terminal installed in the sales site 16 is provided with a printer, the information related to the product may be printed by the printed and provided to the consumer. Still alternatively, a label with the information related to the product may be printed by a terminal in the sales site 16 when the product is displayed at a place of sale in the sales site 16, and the information may be provided to the consumer by attaching the label printed with the information to the product itself or the package of the product.

In the embodiment described above, a tomato is given as an example of the product, but the embodiment can be applied to arbitrary products. For example, the embodiment may be applied to arbitrary vegetables or fruits sold in a sales site such as a shop without being packaged. Further, the embodiment may be applied to vegetables and fruits contained in a plastic bag or a container in the process from shipping to sales. Further, the product to which the embodiment is applied may not be limited to vegetables and fruits but also to other arbitrary products such as industrial products.

### [INDUSTRIAL APPLICABILITY]

According to an aspect of the present invention, it is possible determine the identity of a product based on a characteristic of the product.

### [REFERENCE SIGNS LIST]

10 ... product distribution system, 12 ... shipping site, 14 ... intermediate site, 16 ... sales site, 18 ... delivery means, 20, 21, 22 ... product, 24 ... container, 26 ... baggage, 28 ... user terminal, 30 ... product management apparatus, 32 ... acquisition unit, 34 ... determination unit, 36 ... notification unit, 38 ... recording unit, 40 ... storage unit, 50 ... product master, 52 ... baggage master, 54 ... production data, 56 ... delivery data, 58 ... characteristic data, 60 ... environmental data

## Claims

1. A product management apparatus comprising:
a storage unit that stores first characteristic data indicating a characteristic of a first product at a first date and time;
an acquisition unit that acquires second characteristic data indicating a characteristic of a second product at a second date and time after the first date and time; and
a determination unit that determines whether the first product and the second product are identical based on the first characteristic data, the second characteristic data, and a time elapsed since the first date and time until the second date and time.

2. The product management apparatus according to claim 1, wherein
the acquisition unit further acquires environmental data derived from measuring an environment surrounding the first product or the second product since the first date and time until the second date and time, and
the determination unit determines whether the first product and the second product are identical based further on the environmental data.

3. The product management apparatus according to claim 1 or 2, wherein
the determination unit determines whether the first product and the second product are identical by estimating a change in the characteristic of the first product or the second product due to a time elapsed since the first date and time until the second date and time.

4. The product management apparatus according to any one of claims 1 through 3, wherein
the storage unit further stores data related to delivery of the first product,
the acquisition unit further acquires data related to a place of the second product, and
the determination data determines whether the first product and the second product are identical based further on the data related to the delivery of the first product and the data related to the place of the second product.

5. The product management apparatus according to any one of claims 1 through 4, further comprising:
a recording unit that records, in the storage unit, data related to the second product acquired from the acquisition unit as data related to the first product, when the determination unit determines that the first product and the second product are identical.

6. The product management apparatus according to any one of claims 1 through 5, further comprising:
a notification unit that communicates information based on determination by the determination unit to a source of transmission of the second characteristic data.

7. The product management apparatus according to claim 6, wherein
the notification unit communicates data related to the first product to the source transmission of the second characteristic data when the determination unit determines that the first product and the second product are identical.

8. The product management apparatus according to claim 6 or 7, wherein
the determination unit verifies a change in the characteristic of the first product or the second product due to a time elapsed since the first date and time until the second date and time, and
the notification unit communicates information related to the change in the characteristic verified by the determination unit to the source of transmission of the second characteristic data.

9. A product management method comprising:
storing first characteristic data indicating a characteristic of a first product at a first date and time;
acquiring second characteristic data indicating a characteristic of a second product at a second date and time after the first date and time; and
determining whether the first product and the second product are identical based on the first characteristic data, the second characteristic data, and a time elapsed since the first date and time until the second date and time.

10. A program comprising computer-implemented modules including:
a module that stores first characteristic data indicating a characteristic of a first product at a first date and time;
a module that acquires second characteristic data indicating a characteristic of a second product at a second date and time after the first date and time; and
a module that determines whether the first product and the second product are identical based on the first characteristic data, the second characteristic data, and a time elapsed since the first date and time until the second date and time.
